# EUROPEAN PATENT APPLICATION

(11) **EP 2 599 653 A2**
(43) Date of publication of application: **05.06.2013**
(21) Application number: 12194885.5
(22) Date of filing: 29.11.2012
(51) Int. Cl.: B60J 10/00, B60J 10/04, B60R 13/04

(54) **Door molding**

(30) Priority: 30.11.2011 JP 2011262566
(71) Applicant: AISIN SEIKI KABUSHIKI KAISHA, Kariya-shi, Aichi-ken 448-8650 (JP)
(72) Inventor: Kanazawa, Yoshihiro, Kariya-shi, Aichi-ken,, 448-8650 (JP)
(74) Representative: Winter, Brandl, Fürniss, Hübner, Röss, Kaiser, Polte - Partnerschaft

(57) **Abstract**

A door molding (10) configured to attach to a window frame (101) of a vehicle door (100) includes a design member (21) formed in a thin-film form provided on a surface of a core member (20), the design member (21) made from a resin material containing metal particles.

## Description

### TECHNICAL FIELD

This disclosure generally relates to a door molding.

### BACKGROUND DISCUSSION

A known door molding configured to attach to a window frame of a vehicle door, which is a belt molding that attaches along a belt line of a vehicle door, is disclosed in JPH09-277829A, hereinafter referred to as Reference 1. As illustrated in Fig. 3, the belt molding disclosed in Reference 1 is provided with a design member 55 formed in a strip form made from a colored synthetic resin arranged at a side surface of the belt molding in a direction of a vehicle exterior so that a vehicle owner may select the belt molding from a wide variety of color variations in accordance with a color preference of the vehicle owner. The belt molding disclosed in Reference 1 is integrally formed with a weather strip 50 provided for wiping off water droplets from an external surface of a door window glass 62 while moving the door window glass 62 up and down.

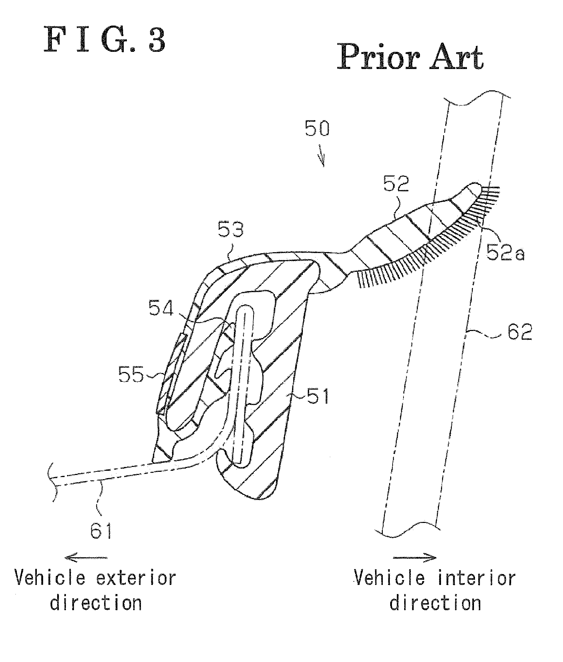

As Fig. 3 illustrates, the weather strip 50 includes a base portion 51 for attachment having a substantially inverted U-shape cross section that fits to an upper most end of a door panel 61. The weather strip 50 also includes a seal lip 52 extending obliquely upward from an upper end in an inward direction of the base portion 51 for attachment. At a lower surface of the seal lip 52, implant fibers 52a that make contact with the external surface of the door window glass 62 are provided. The base portion 51 for attachment is made from a hard resin to serve as a core. The seal lip 52 is made from a soft resin. The soft resin forming the seal lip 52 extends to a side surface of the base portion 51 for attachment in the direction of the vehicle exterior to form a cover layer 53 that covers an entire area of the side surface. The soft resin further extends to form a retaining lip 54 that engages to the door panel 61. A portion of the cover layer 53 is formed with a groove formed in a strip form. The groove is filled with a colored resin added with pigments to form the design member 55. As a result, the design member 55 provides a metallic look to the belt molding at a low cost relative to a belt molding provided with a metallic look by providing a solid form stainless steel or a like radiant metal material or a radiant film material.

The belt molding disclosed in Reference 1 provides the metallic look by using a colored synthetic resin, which lacks radiance.

A need thus exists for enhancing a metallic look of a door molding by increasing radiance without increasing cost.

### SUMMARY

According to an aspect of this disclosure, a door molding configured to attach to a window frame of a vehicle door includes a design member formed in a thin-film form provided on a surface of a core member, the design member made from a resin material containing metal particles.

Upon the arrangements described herewith, the door molding is advantageous in restraining cost of the door molding from increasing relative to a door molding provided with a design member made from a solid form stainless steel or a like radiant metal material, or a radiant film material. Instead of providing pigments for providing colors, metal particles are provided as radiance materials that provide target radiance. Accordingly, a shiny metallic look may be provided at a low cost. In a state where the design member is formed in the thin-film form, the core member underneath the design member may be visually recognized through the design member while a metallic look is provided, however, adjusting, for example, film thickness of the design member 21, size of the metal particles, or amount of the metal particles may restrain the core member underneath the design member from being visually recognized through the design member.

According to another aspect of this disclosure, the design member of the door molding is made from the resin material as a base, the resin material provided with a characteristic and film thickness that allow penetration of visible light, the resin material allowing visual recognition of the core member through the resin material. The design member contains the metal particles serving as the radiance materials reflecting the visible light that penetrates into the resin material to limit visual recognition of the core member.

In a state where the door molding is provided with the design member made from the resin material as the base, the resin material provided in the thin-film form that allows penetration of visible light and allows visual recognition of the core member through the resin material, the design member is provided with the metallic look without the colors underneath the design member being visually recognized through the design member.

According to further aspect of this disclosure, the design member of the door molding is provided with the metal particles being evenly distributed in the resin material.

In a state where the design member is provided with fixed film thickness and with the metal particles of fixed size and amount, the design member provided with the metal particles evenly distributed in the design member makes visually recognizing the colors underneath the design member difficult. Accordingly, the film thickness of the design member may be reduced, the metal particles having a particle diameter of general versatility may be selected for use, and furthermore, the amount of the metal particles contained in the design member may be reduced. Accordingly, the design member may be manufactured by using a manufacturing equipment and by following a manufacturing process for manufacturing a door molding provided with a design member formed in a thin-film form without containing the metal particles. The door molding may be provided without changing peripheral parts, for example, a door panel, or a door mirror. As a result, the door molding provided with the design member without the metal particles is replaced with the door molding provided with the design member containing the metal particles without difficulties.

According to another aspect of this disclosure, the design member of the door molding contains metal particles of aluminum or of stainless steel.

Particles of aluminum or of stainless steel are provided to serve as radiance materials that provide target radiance to the design member. A shiny metallic look may be provided, accordingly.

According to further aspect of this disclosure, the design member of the door molding is made from the resin material as the base, the resin material being provided with film thickness equal to or more than 0.2 millimeters.

The door molding is configured such that the door molding is manufactured by extrusion. Approximately 0.2 mm is minimum film thickness of the design member that may be handled by an extrusion process in a manufacturing process. Visually recognizing colors underneath the design member becomes more difficult as the film thickness of the design member formed in the thin-film form becomes thicker. Accordingly, in a state where 0.2 mm is selected as the film thickness of the design member, visually recognizing colors underneath the design member through the design member is easiest, however, mixing fine metal particles in the resin material and distributing the metal particles within the resin material restrain the colors underneath the design member from being visually recognized through the design member.

According to another aspect of this disclosure, the design member of the door molding is made from the resin material containing the metal particles of equal to or less than 5 µm particle diameter serving as the radiance materials, the resin material containing an amount of the metal particles equal to or more than 1% in ratio by weight.

Smaller the particle diameter of the metal particles mixed into the resin material, the effect is higher in restraining the colors underneath the design member from being visually recognized through the design member. Accordingly, using the metal particles of smaller particle diameter, for example the metal particles of 2 µm particle diameter is more effective in restraining the colors underneath the design member from being visually recognized through the design member. Nevertheless, technology for handling the metal particles of 2 µm is sophisticated. As a result, a use of 2 µm diameter metal particles leads to increasing cost. Accordingly, using the metal particles of approximately 5 µm particle diameter, which is the smallest in the metal particles of general versatility, is favorable. By containing the metal particles of 5 µm particle diameter to the amount equal to or more than 1% in ratio by weight, the metallic look is provided without the colors underneath the design member being visually recognized through the design member.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a side view of a vehicle illustrating a periphery of a belt line where a belt molding according to a first embodiment serving as a door molding attaches to;

Fig. 2 is a cross-sectional view of the belt molding according to the first embodiment taken along line II-II in Fig. 1;

Fig. 3 is a cross-sectional view illustrating a configuration of a known belt molding integrally formed with a weather strip;

### DETAILED DESCRIPTION

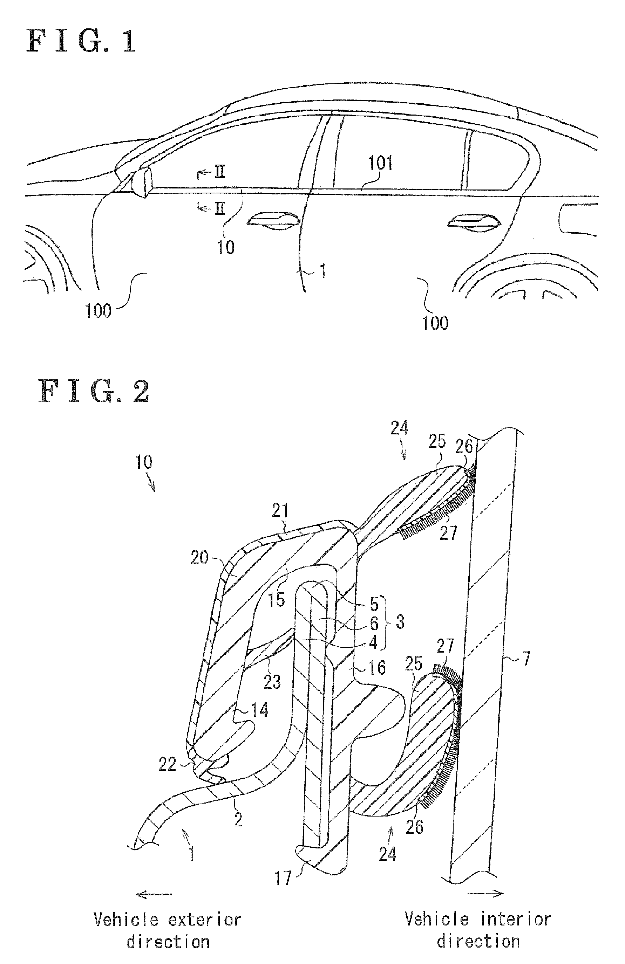

A belt molding 10, which serves as a door molding, according to a first embodiment will be described. As Fig. 1 illustrates, the belt molding 10 attaches to a portion of a window frame 101 of a vehicle door 100 where a belt line is formed, which in other words is an upper most end of a door panel 1.

As Fig. 2 illustrates, at an upper end portion of the door panel 1, a curved portion 2 connects to a flange portion 3, which is provided in a vehicle interior direction relative to the curved portion 2, the flange portion 3 that forms the belt line. The flange portion 3 includes a first surface portion 4 extending upward from the curved portion 2, a folded portion 5 having a substantially inverse U-shape cross section formed by folding back at an upper most end of the first surface portion 4 and extending in a direction of a back surface of the door panel 1, and a second surface portion 6 extending downward from the folded portion 5 along the first surface portion 4. The second surface portion 6 extends side by side partway with the first surface portion 4 and then extends further downward.

The belt molding 10 includes a core member 20 having a substantially inverse U-shape cross section provided with a first opposing portion 14 that covers the first surface portion 4 of the flange portion 3, a folded opposing portion 15 that covers the folded portion 5, and a second opposing portion 16 that covers the second surface portion 6. The core member 20 is made of hard polypropylene containing 40% talc in ratio by weight, or a similar material, which provides predetermined product rigidity and a low linear expansion characteristic. A hook portion 17 is formed at a lower end of the second opposing portion 16, which selectively engages to a lower end surface of the second surface portion 6 of the flange portion 3.

A design member 21 formed in a thin-film form is provided on an external surface of the first opposing portion 14 and the folded opposing portion 15 of the core member 20. The design member 21 is made from a resin material as a base, which is a hard polypropylene, or a similar material. Film thickness of the design member 21 is defined to 0.2 millimeters (mm). The design member 21 contains 1% in ratio by weight of metal particles, which are aluminum particles of 5 micrometers (µm) particle diameter. The metal particles serve as radiance materials providing radiance to the resin material. The resin material without containing the radiance materials provided in 0.2 mm film thickness is thin enough to allow penetration of visible light and to allow visual recognition of the core member 20 through the thin-film of the resin material. In a state where the resin material is provided with the radiance materials evenly distributed within the resin material, the radiance materials reflect the visual light that penetrates into the resin material to limit visual recognition of the core member 20. As a result, a metallic look is favorably provided without a color of the core member 20 being visually recognized through the design member 21. Approximately 0.2 mm is minimum film thickness of the design member 21 that may be reliably handled in an extrusion process in a manufacturing process. The design member 21 is configured to be manufactured by using a manufacturing equipment and by following a manufacturing process used for manufacturing a door molding provided with a design member made from a resin material without the radiance material.

A first lip portion 22 is provided at a lower end portion of the first opposing portion 14 of the core member 20 in a state where the first lip portion 22 extends toward the curved portion 2 of the door panel 1. The first lip portion 22 is made from a material softer than the core member 20. An example of such material is an olefin series thermoplastic elastomer having Shore A hardness of 70 degrees. A second lip portion 23 is provided at a middle portion in a height direction of the first opposing portion 14. The second lip portion 23 extends toward the first surface portion 4 of the door panel 1. The first lip portion 22 and the second lip portion 23 are made from a same or a similar material.

Weather strips 24 in pressure contact states with a door window glass 7 are provided for wiping external surfaces of the door window glass 7. One of the weather strips 24 is provided on an outward surface at a borderline area between the folded opposing portion 15 and the second opposing portion 16. The other weather strip 24 is provided on the outward surface of the second opposing portion 16 at a portion near the lower end. Each of the weather strips 24 includes a main body 25 made from an olefin series thermoplastic elastomer having Shore A hardness of 70 degrees, or a similar material. On a downward surface of each of the main bodies 25, the downward surface connecting a distal end and a base end, a resin portion 26 is arranged as a portion where implant fibers 27 adheres. The implant fibers 27 are provided at the resin portions 26.

The first lip portion 22 is in a pressure contact state with the curved portion 2 of the door panel 1. An elastic rebound force of the first lip portion 22 biases the belt molding 10 in an upward direction. The hook portion 17 engages to the lower end surface of the second surface portion 6. Upon the arrangement described herewith, a position in an upward and downward direction of the belt molding 10 relative to the door panel 1 is maintained at a predetermined position and at the same time looseness in the upward and downward direction is restrained. The second lip portion 23 is in a pressure contact state with the first surface portion 4 of the flange portion 3. An elastic rebound force of the second lip portion 23 biases the belt molding 10 in a vehicle exterior direction. Furthermore, the second opposing portion 16 is pressed against the second surface portion 6. Upon the arrangement described herewith, a position in a horizontal direction of the belt molding 10 relative to the door panel 1 is maintained at a predetermined position and at the same time looseness in the horizontal direction is restrained.

How the belt molding 10 works will be described next. The design member 21 having the film thickness of 0.2 mm is provided on a surface of the core member 20. The design member 21 contains aluminum particles of 5 µm particle diameter. When the belt molding 10 is attached to the belt line in a state where the design member 21 faces the vehicle exterior direction, the aluminum particles reflect visible light and shines. The core member 20 underneath the design member 21 is not visually recognizable through the design member 21 and the metallic look is favorably provided. As a result, the belt molding 10 becomes an ornament that provides a luxurious look to the belt line, which is a part of the window frame 101 of the vehicle door 100.

Upon the arrangements described herewith, the belt molding 10 according to the first embodiment is advantageous in following aspects. Using the resin material containing metal particles for the design member 21 restrains cost of the belt molding 10 from increasing relative to a belt molding provided with a design member made from a solid form stainless steel, or a like radiant metal material, or a radiant film material. Instead of providing pigments for providing colors, metal particles serving as radiance materials are provided for providing target radiance. Accordingly, a shiny metallic look may be provided at a low cost. Relative to a configuration of the design member using a metal plate or a metal foil, the design member may be reduced in weight.

In a state where the belt molding 10 is provided with the design member 21 made from the resin material as the base, the resin material provided in the thin-film form having the film thickness of 0.2 mm that allows penetration of visible light and allows visual recognition of the core member 20 through the resin material, the design member 21 is provided with the metallic look without the colors underneath the design member 21 being visually recognized through the design member 21.

In a state where the design member 21 is provided with fixed film thickness and with the metal particles of fixed size and amount, the design member 21 provided with the metal particles evenly distributed in the design member 21 makes visually recognizing the colors underneath the design member 21 difficult. Accordingly, the film thickness of the design member 21 may be reduced to 0.2 mm. The metal particles of 5 µm particle diameter, which is a particle diameter of general versatility, may be selected for use. Furthermore, the amount of the metal particles contained in the design member 21 may be reduced to 1% in ratio by weight. Accordingly, the design member 21 may be manufactured by using a manufacturing equipment and by following a manufacturing process for manufacturing a belt molding provided with a design member formed in a thin-film form without containing metal particles. The belt molding 10 may be provided without changing peripheral parts, for example, the door panel 1, or a door mirror. As a result, the belt molding provided with the design member without containing the metal particles is replaced with the belt molding 10 provided with the design member 21 containing the metal particles without difficulties.

In a state where the design member 21 is formed in the thin-film form, which allows visual recognition of the core member 20 underneath the design member 21 through the design member 21, mixing the metal particles serving as the radiance materials to the resin material, which is the base material of the design member 21, provides the design member 21 with the metallic look without the colors underneath the design member 21 being visually recognized through the design member 21. Accordingly, the belt molding 10 serves as an ornament that provides the luxurious look to the belt line, which is a part of the window frame 101 of the vehicle door 100.

The belt molding 10 according to the first embodiment may be altered in following manners. Provided that the core member 20 underneath the design member 21 is provided with reliable product rigidity, a soft resin may be selected for use as the base material for the design member 21 and metal particles may be mixed into the soft resin to form the design member 21. In order to provide reliable product rigidity to the core member 20, a core metal may be embedded in a soft resin to form the core member 20, instead of providing the core member 20 entirely with the soft resin.

The design member 21 of the belt molding 10 according to the first embodiment is provided with the film thickness of 0.2 mm in consideration of replacing a belt molding provided with a design member having film thickness of 0.2 mm. In consideration of replacing a belt molding provided with a design member having film thickness of 0.5 mm, the film thickness of the design member 21 may be changed to 0.5 mm. Visually recognizing colors underneath the design member 21 becomes more difficult as the film thickness of the design member 21 formed in the thin-film form becomes thicker. Accordingly, a particle diameter of the metal particles may be increased or the amount of the metal particles to be contained may be decreased to provide favorable results.

The film thickness of the design member 21 provided in the belt molding 10 according to the first embodiment is 0.2 mm, which is minimum film thickness an extrusion process in a manufacturing process may handle. In a situation where the extrusion process in the manufacturing process handles film thickness of less than 0.2 mm in accordance with a technological advancement, providing the design member 21 provided with the film thickness of less than 0.2 mm may be allowed. In a state where the design member 21 is provided in 0.2 mm film thickness, visual recognition of the colors underneath the design member 21 through the design member 21 becomes easy. Nevertheless, using the metal particles of less than 5 µm particle diameter restrains the visual recognition of the colors underneath the design member 21 through the design member 21. In order to reduce cost, using the metal particles of general versatility particle diameter, is favorable, however, for preventing the visual recognition of the colors underneath the design member 21, using fine metal particles, each of which having the particle diameter of 2 µm, may be allowed. As an alternative to selecting the metal particles of 2 µm particle diameter, metal particles of 5 µm particle diameter, which is a particle diameter of general versatility, may be selected. Even in a case where the metal particles of 5 µm particle diameter is selected, adjustments, for example, increasing an amount of the metal particles to be contained in the resin material that serves as the base material to 2% in ratio by weight, or mixing the metal particles in the resin material in a state where the metal particles are evenly distributed in the resin material, are effective in further preventing the colors underneath the design member 21 from visually recognized and providing a metallic look.

The metal particles to be contained in the design member 21 are not limited to aluminum particles. Stainless steel particles may be used instead of the aluminum particles for the design member 21. Form of the belt molding 10 and materials used for providing elements that structure the belt molding 10 may be changed in accordance with a specification change.

The belt molding 10 serves as a door molding, however, the door molding is not limited to a belt molding. A frame molding configured to attach to the window frame 101 of the vehicle door 100 may serve as a door molding provided with a design member formed in a thin-film form.

The door molding according to this disclosure includes a design member made from a resin material as a base provided with film thickness equal to or more than 0.2 mm. The design member is made from the resin material containing metal particles of equal to or less than 5 µm particle diameter serving as the radiance material. The resin material contains an amount of the metal particles equal to or greater than 1% in ratio by weight.

The door molding according to this disclosure is configured such that the door molding is manufactured by extrusion. Approximately 0.2 mm is minimum film thickness of the design member that may be handled by an extrusion process in a manufacturing process. Visually recognizing colors underneath the design member becomes more difficult as the film thickness of the design member formed in a thin-film form becomes thicker. Accordingly, in a state where 0.2 mm is selected as the film thickness of the design member, visually recognizing colors underneath the design member through the design member is easiest, however, mixing fine metal particles in the resin material and distributing the metal particles within the resin material restrain the colors underneath the design member from being visually recognized through the design member. Metal particles of 20 µm particle diameter is an example of the metal particles having relatively large particles. In a state where the metal particles of 20µm particle diameter are mixed and distributed within the resin material, an effect is low in restraining the colors underneath the design member from being visually recognized through the design member. In other words, smaller the particle diameter, the effect is higher in restraining the colors underneath the design member from being visually recognized through the design member. Accordingly, using the metal particles of smaller particle diameter, for example the metal particles of 2 µm particle diameter is more effective in restraining the colors underneath the design member from being visually recognized through the design member. Nevertheless, technology for handling the metal particles of 2 µm is sophisticated. As a result, a use of 2 µm diameter metal particles leads to increasing cost. Accordingly, using the metal particles of approximately 5 µm particle diameter, which is the smallest in the metal partides of general versatility, is favorable. By containing the metal particles of 5 µm particle diameter to an amount equal to or more than 1% in ratio by weight, a metallic look is provided without the colors underneath the design member being visually recognized through the design member.

The door molding according to this disclosure may be considered as an ornamental part provided with a design member formed in a thin-film form having equal to or more than 0.2 mm film thickness provided on a surface of the ornamental part. The design member is made by mixing metal particles that serve as radiance materials to a resin material that serves as a base material.

Upon the arrangement described herewith, the design member is formed in the thin-film form that allows visual recognition of a material underneath the design member through the design member. By mixing the metal particles that serve as the radiance materials to the resin material that serves as the base material, a metallic look is provided without the colors underneath the design member being visually recognized through the design member, the metallic look which makes the ornamental part look luxurious.

## Claims

1. A door molding (10) configured to attach to a window frame (101) of a vehicle door (100), comprising:
a design member (21) formed in a thin-film form provided on a surface of a core member (20), the design member (21) made from a resin material containing metal particles.

2. The door molding (10) according to Claim 1, wherein
the design member (21) is made from the resin material as a base, the resin material provided with a characteristic and film thickness that allow penetration of visible light, the resin material allowing visual recognition of the core member (20) through the resin material, and wherein
the design member (21) contains the metal particles serving as radiance materials reflecting the visible light that penetrates into the resin material to limit visual recognition of the core member (20).

3. The door molding (10) according to Claim 1 or 2, wherein the design member (21) is provided with the metal particles being evenly distributed in the resin material.

4. The door molding (10) according to Claims 1 to 3, wherein the design member (21) contains metal particles of aluminum or of stainless steel.

5. The door molding (10) according to Claims 2 to 4, wherein the design member (21) is made from the resin material as the base, the resin material being provided with film thickness equal to or more than 0.2 millimeters.

6. The door molding (10) according to Claims 3 to 5, wherein the design member (21) is made from the resin material containing the metal particles of equal to or less than 5 µm particle diameter serving as the radiance materials, the resin material containing an amount of the metal particles equal to or more than 1 % in ratio by weight.
